# FASCICULE DE BREVET EUROPEEN

(11) **EP 1 162 376 B1**
(45) Date de publication et mention de la délivrance du brevet: **06.12.2006**
(21) Numéro de dépôt: 01401431.0
(22) Date de dépôt: 01.06.2001
(51) Int. Cl.: F16B 23/00

(54) **Organe de fixation à empreinte d'extrémité dans une partie filetée**
Befestigungsvorrichtung mit einer Vertiefung am Ende ihres Gewindestabes
Fixing member with a recess at the end of its threaded shank

(30) Priorité: 06.06.2000 FR 0007213
(43) Date de publication de la demande: 12.12.2001
(73) Titulaire: GFI Aerospace, 75012 Paris (FR)
(72) Inventeur: Fauchet, Christian Roger Jacques, 95810 Grisy-Les-Platres (FR)
(74) Mandataire: Poulin, Gérard

(56) Documents cités:
- EP-A- 0 087 721
- EP-A- 0 273 078
- GB-A- 2 141 803
- US-A- 2 083 092
- US-A- 3 584 667
- "ELLIPSES ADVANCE FASTENER DRIVE SYSTEM" MACHINE DESIGN,US,PENTON,INC. CLEVELAND, vol. 66, no. 4, 21 février 1994 (1994-02-21), page 24 XP000438232 ISSN: 0024-9114

## Description

### Domaine technique

L'invention concerne un organe de fixation comprenant une partie terminale filetée dont une face d'extrémité présente une empreinte en creux apte à recevoir un outil de manoeuvre de forme complémentaire.

Un organe de fixation de ce type est prévu pour être associé à un écrou, pour réaliser l'assemblage d'au moins deux pièces à partir d'un seul côté dudit assemblage.

L'invention trouve une application privilégiée dans l'industrie aéronautique. Elle peut toutefois être utilisée dans tout autre domaine industriel, notamment lorsque l'accès à l'un des côtés des pièces à assembler est difficile ou impossible.

### Etat de la technique

Comme l'illustrent notamment les documents FR-A-2 383 350, US-A-2 083 092 et US-A-3 584 667, on connaît des organes de fixation à tête creuse, tels que des vis, dont la tête comporte une empreinte en creux, de forme multilobée, prévue pour coopérer avec un outil d'entraînement de forme correspondante. La forme multilobée de l'empreinte en creux permet d'obtenir un couple de serrage plus important que celui qui serait obtenu en utilisant une empreinte polygonale de caractéristiques équivalentes. En effet, le développé d'un contour polygonal à côtés droits est moins grand que le développé d'un contour à côtés courbes.

Dans ces vis à tête creuse de l'art antérieur, le choix du diamètre extérieur de la tête de vis est généralement libre et aucune contrainte n'est appliquée sur ladite tête après la formation de l'empreinte. par conséquent, il n'existe pas de risque de fissuration de la tête de la vis autour de l'empreinte.

Par ailleurs, comme le montre notamment le document GB-A-893 356, on sait que le couple de serrage obtenu avec un organe de fixation à tête creuse augmente avec la profondeur d'engagement de l'outil, c'est-à-dire avec la profondeur de l'empreinte réalisée dans la tête de l'organe de fixation. Ce document montre également l'accroissement du couple de serrage obtenu en passant d'une empreinte hexagonale à une empreinte équivalente à côtés courbes.

L'utilisation d'écrous de fixation dont l'une des faces présente une empreinte de forme multilobée est proposée dans le brevet US-A-3 874 258.

Qu'il s'agisse d'une vis ou d'un écrou, on peut observer que, dans tous ces organes de fixation connus, l'empreinte destinée à coopérer avec l'outil est toujours réalisée dans une partie (tête de vis, etc.) dont la forme extérieure est bombée. Le renforcement ainsi obtenu permet notamment à l'outil d'exercer un couple de serrage important, sans provoquer de déformation de la matière.

On connaît également des organes de fixation comportant une partie terminale filetée dont la face d'extrémité comporte une empreinte, destinée à recevoir un outil d'entraînement. Un tel organe, dépourvu de tête et appelé "vis tubulaire" ou "vis sans tête", est généralement utilisé pour réaliser l'assemblage de plusieurs pièces. Comme l'illustrent notamment les documents US-A-2 133 409, US-A-2 532 815 et US-A-4 480 513, l'empreinte utilisée est alors essentiellement de forme hexagonale.

Comme l'illustrent les documents US-A-4 957 401 et FR-A-1 198 913, on connaît aussi des organes de fixation munis d'une tête sans empreinte et d'une partie terminale filetée à empreinte hexagonale. De tels organes sont destinés à l'assemblage de pièces accessibles d'un seul côté.

On sait que les organes de fixation comportant une empreinte dans leur partie filetée présentent une résistance mécanique moindre, du fait de la présence de cette empreinte. Cette moindre résistance se manifeste notamment lors de la formation du filetage par roulage et laminage de la matière à la surface de l'ébauche, selon la technique décrite dans le document FR-A-2 469 229. Cette technique consiste à monter l'ébauche entre deux rouleaux à filets, de façon à former le filetage par repoussage de la matière, en exerçant notamment des efforts radiaux sur l'ébauche en rotation.

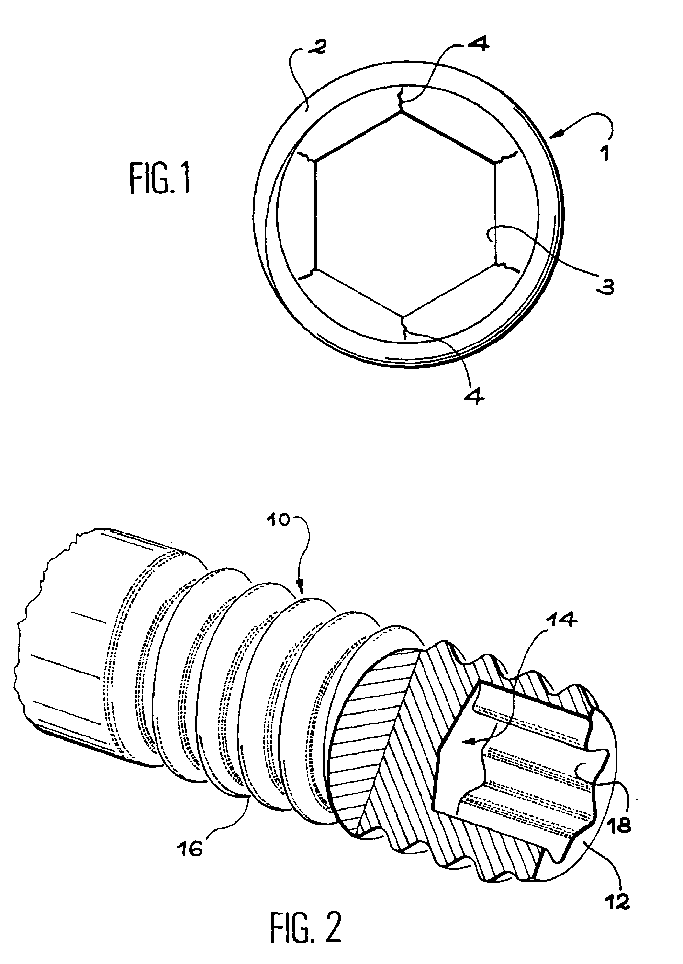

Comme l'illustre la figure 1 des dessins annexés, lorsque cette technique de formation du filetage 2 est appliquée sur une ébauche 1 comportant une empreinte 3 dans la partie destinée à former le filetage, il arrive que des criques 4 apparaissent dans les angles de l'empreinte, que celle-ci soit de forme hexagonale ou autre. Ces criques 4 trouvent leur origine dans la variation de rigidité non maîtrisée de la section droite sur laquelle on applique les efforts de roulage.

Dans le document FR-A-2 584 151, qui est considéré l'état de la technique le plus proche, il est proposé de résoudre ce problème en réalisant une empreinte de forme multilobée dotée d'un nombre impair de lobes, de préférence égal à sept. Plus précisément, l'empreinte formée dans l'extrémité filetée de l'organe de fixation comporte un bord périphérique en forme de ligne courbe continue incluant un nombre impair de lobes identiques, régulièrement répartis sur ce bord.

Comme on l'explique dans ce document, la forme particulière de l'empreinte présente l'avantage d'autoriser la réalisation de celle-ci par déformation plastique du métal, en même temps que le forgeage de la pièce brute, avant que le filetage ne soit formé par roulage et laminage de la matière à la surface de l'ébauche, en limitant les risques de fissuration dans la région annulaire située autour du bord périphérique de l'empreinte. Cet avantage est particulièrement appréciable dans le cas de matériaux difficiles à déformer plastiquement, pour lesquels les risques de formation de criques sont particulièrement élevés. Il est ainsi possible, avec cette forme d'empreinte multilobée, d'augmenter le couple appliqué sur l'organe de fixation pour le maintenir et participer au blocage de l'écrou.

Cependant, des essais effectués par le demandeur ont montré que des résultats assez comparables pouvaient être obtenus avec un organe de fixation dont l'empreinte présente un nombre pair de lobes. Ces essais ont également montré que l'utilisation d'une empreinte de forme multilobée, du filetage n'est pas résolu de façon totalement satisfaisante par les enseignements du document FR-A-2 584 151.

### Exposé de l'invention

L'invention a précisément pour objet un organe de fixation fileté, à empreinte de forme multilobée, dont la conception originale lui permet d'éviter à coup sûr la formation de fissures dans le métal, lorsque le filetage est réalisé par laminage après que l'empreinte ait été obtenue, par déformation plastique du métal, lors du forgeage de la pièce brute.

Conformément à l'invention, ce résultat est obtenu au moyen d'un organe de fixation conforme à la revendication 1.

Des essais effectués par le demandeur ont montré, en effet, que le rapport entre les distances maximale et minimale précitées est une caractéristique essentielle permettant d'optimiser la définition des lobes de l'empreinte afin de permettre la formation ultérieure du filetage sans risque d'apparition de criques ou de déformation. Ainsi, le demandeur a établi que seuls les organes de fixation dans lesquels l'empreinte est réalisée en respectant un rapport entre les distances maximale et minimale précitées compris entre environ 1,25 et environ 1,75, permettaient d'éviter la formation de criques ou de fissures.

Bien qu'il soit possible de réaliser un organe de fixation dont l'empreinte comporte des lobes de formes différentes, les lobes sont de préférence tous identiques et régulièrement répartis.

Avantageusement, chacun des lobes comprend deux faces latérales formant entre elles un angle dont le sommet est situé sensiblement sur la surface périphérique extérieure de la partie terminale filetée.

Cet angle est compris, de préférence, entre environ 23° et environ 37°. Cette caractéristique, combinée avec celle qui concerne le rapport entre les distances maximale et minimale précitées, augmente la rigidité de l'ensemble, ce qui permet d'accroître la résistance à la fissuration pendant l'opération de roulage. En effet, un angle supérieur à 37° favorise l'apparition de criques sous les efforts de roulage, car l'angle a alors tendance à "s'ouvrir et à se fermer", alternativement. A l'inverse, un angle inférieur à 23° a tendance à constituer des "pointes naturelles" de surcontrainte, ce qui est également favorable à la formation des criques.

De préférence, le bord périphérique de l'empreinte comprend de quatre à dix lobes.

Selon un premier mode de réalisation préféré de l'invention, le bord périphérique de l'empreinte comprend cinq lobes et l'angle précité est compris entre 26° et 32°.

Selon un deuxième mode de réalisation préféré de l'invention, le bord périphérique de l'empreinte comprend sept lobes et l'angle précité est compris entre 25° et 27°.

Dans les modes de réalisation préférés de l'invention, le rapport entre les distances maximale et minimale est sensiblement égal à 1,5.

Bien que de nombreux types de métaux puissent être utilisés, l'invention est particulièrement adaptée au cas où l'organe de fixation est réalisé en alliage de titane ou en un matériau métallique difficile à déformer plastiquement.

### Brève description des dessins

On décrira à présent, à titre d'exemples non limitatifs, deux modes de réalisation préférés de l'invention, en se référant aux dessins annexés, dans lesquels :
- la figure 1, déjà décrite, est une vue en bout d'un organe de fixation à empreinte hexagonale de l'art antérieur ;
- la figure 2 est une vue en perspective, partiellement en coupe, qui représente une partie d'un organe de fixation réalisé conformément à l'invention ;
- la figure 3 est une vue en bout d'un premier mode de réalisation de l'organe de fixation, dans lequel l'empreinte comprend cinq lobes ;
- la figure 4 est une vue en bout comparable à la figure 3, illustrant un deuxième mode de réalisation de l'invention, dans lequel l'empreinte comprend sept lobes ;
- la figure 5 est une vue en bout comparable aux figures 3 et 4, illustrant une variante du premier mode de réalisation concernant une empreinte à cinq lobes ; et
- la figure 6 représente l'évolution de l'effort de fissuration (en kN) en fonction de l'angle de chargement (en degrés) dans le cas d'une empreinte hexagonale classique (courbe a), dans le cas d'une empreinte à six lobes conforme à l'invention (courbe b) et dans le cas de l'empreinte à cinq lobes conforme à l'invention, illustrée sur la figure 3 (courbe c).

### Description détaillée de deux modes de réalisation préférés de l'invention

Sur la figure 2, on a représenté une partie terminale filetée 10 d'un organe de fixation réalisé conformément à l'invention. Cet organe de fixation peut être réalisé en un métal quelconque. Dans les modes de réalisation préférés de l'invention, on utilise un métal à haute limite élastique et de faible déformation plastique tel qu'un alliage de titane.

L'organe de fixation selon l'invention est destiné à assurer l'assemblage d'au moins deux pièces (non représentées), à partir d'un seul côté de cet assemblage. A cet effet, l'organe de fixation prend appui sur l'empilement de pièces par une tête de forme quelconque (non représentée) située de l'autre côté de l'assemblage. L'organe de fixation traverse des trous alignés formés à cet effet dans chacune des pièces. La partie terminale filetée 10 fait saillie sur le côté accessible de l'assemblage, de façon à pouvoir coopérer avec un écrou (non représenté) pour assembler les différentes pièces.

En variante, l'organe de fixation selon l'invention peut aussi être un organe de type "vis tubulaire", dépourvu de tête.

L'organe de fixation comprenant la partie terminale filetée 10 est une pièce massive réalisée par forgeage, puis laminage.

De façon plus précise, on réalise tout d'abord par forgeage une ébauche de pièce se présentant généralement sous la forme d'une tige cylindrique munie d'une tête. Sur sa face d'extrémité formant la face d'extrémité 12 de la partie terminale filetée 10 de la pièce finie, cette ébauche de pièce comprend une empreinte en creux 14, également obtenue lors du forgeage. Une opération de laminage ultérieur permet de former un filetage 16 sur la surface périphérique extérieure de l'ébauche.

La référence 20 désigne la surface périphérique extérieure de la partie terminale filetée 10. Plus précisément, l'expression "surface périphérique extérieure" correspond dans l'ensemble du texte au diamètre sur flancs du filetage, c'est-à-dire au diamètre de la partie filetée 10, à mi-hauteur des filets. La surface périphérique extérieure 20 correspond aussi au diamètre extérieur de l'ébauche, avant roulage.

L'empreinte en creux 14 comporte un bord périphérique 18 qui forme une ligne courbe continue, c'est-à-dire dépourvue de discontinuité, lorsque l'organe de fixation est vu en bout.

Plus précisément, la ligne courbe continue formée par le bord périphérique 18 inclut au moins trois lobes répartis sur ce bord. Tous les lobes de l'empreinte 14 sont de préférence identiques et régulièrement répartis sur le bord périphérique 18. Toutefois, ils peuvent aussi présenter des formes différentes, une même empreinte pouvant par exemple être formée alternativement de grands lobes et de petits lobes. Ils peuvent également être disposés à intervalles irréguliers le long du bord 18.

Avantageusement, le bord périphérique 18 de l'empreinte 14 comprend au minimum quatre lobes et au maximum dix lobes.

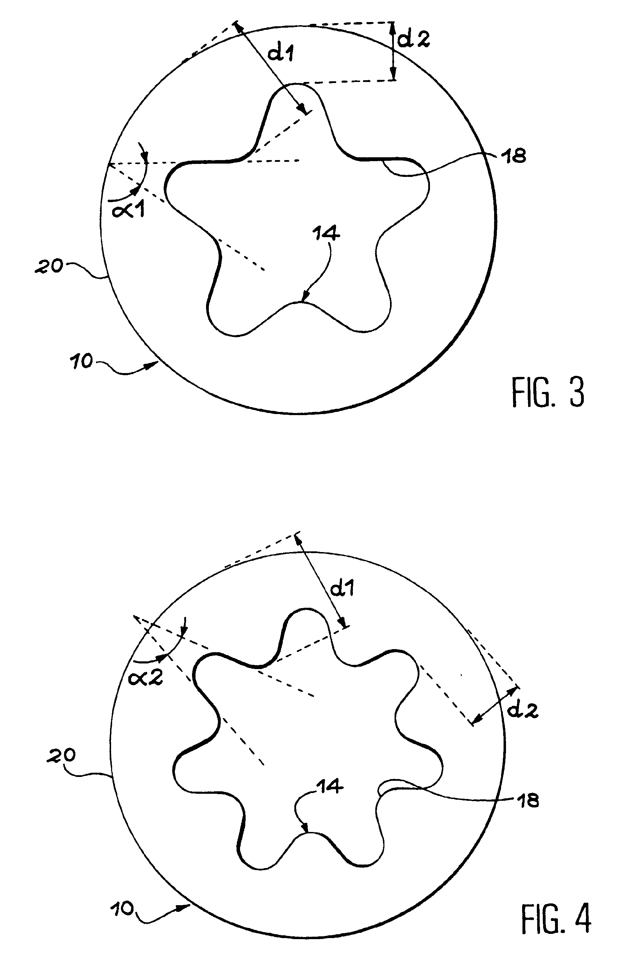

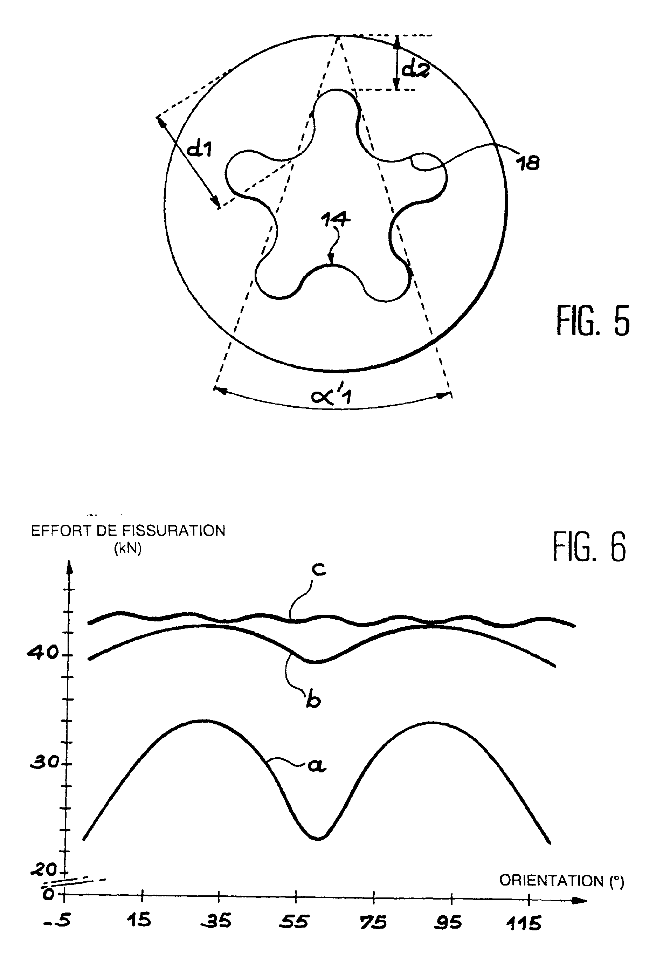

Selon un premier mode de réalisation préféré de l'invention, illustré sur la figure 3, et selon une variante de ce premier mode illustré sur la figure 5, le bord périphérique 18 de l'empreinte 14 comporte cinq lobes identiques, régulièrement répartis sur le bord 18.

Dans un deuxième mode de réalisation préféré de l'invention, illustré sur la figure 4, le bord périphérique 18 de l'empreinte 14 comprend sept lobes identiques, régulièrement répartis sur le bord 18.

Comme l'illustrent plus particulièrement les figures 3, 4 et 5, la forme multilobée de l'empreinte 14 est telle que la distance entre le bord périphérique 18 de cette empreinte et la surface périphérique extérieure 20 de la partie terminale filetée 10 varie entre une distance maximale d1 et une distance minimale d2. Selon une caractéristique essentielle de l'invention, le rapport entre la distance maximale d1 et la distance minimale d2 est compris entre environ 1,25 et environ 1,75. Dans les modes de réalisation préférés de l'invention illustrés sur les figures 3, 4 et 5, ce rapport est de préférence sensiblement égale à 1,5.

La forme du bord périphérique 18 de l'empreinte 14 est également caractérisée par l'angle formé entre les deux faces latérales d'un même lobe. Dans les modes de réalisation préférés de l'invention, cet angle est compris entre environ 23° et environ 37°.

Dans le mode de réalisation de la figure 3 et sa variante de la figure 4, chacun des lobes formés par le bord périphérique 18 de l'empreinte 14 est délimité par un arc de cercle formant le fond du lobe et par deux faces latérales planes tangentes à cet arc de cercle. Les lobes adjacents sont reliés par des arcs de cercles tangents aux faces latérales planes desdits lobes.

Dans le premier mode de réalisation illustré sur la figure 3 l'angle α1 formé par les deux faces latérales de chacun des cinq lobes est sensiblement égal à 30. Concrètement, cela signifie que cet angle α1 peut varier entre 26° et 32°.

De façon comparable, dans le deuxième mode de réalisation préféré de l'invention illustré sur la figure 4, l'angle α2 formé entre les deux faces latérales de chacun des sept lobes est sensiblement égale à 26°. Concrètement, cela signifie que cet angle α2 peut varier entre 25° et 27°.

La variante de réalisation illustrée sur la figure 5 diffère du mode de réalisation de la figure 3 par le fait que chaque lobe est défini en section par le raccordement d'un arc de cercle extérieur avec deux arcs de cercle intérieurs de plus grand rayon de courbure. Dans ce cas, les faces latérales du lobe, entre lesquelles est mesuré l'angle α'1, ne passent pas par les points d'inflexion des arcs de cercle mais tangentent à la fois les deux côtés du lobe considéré et les côtés opposés des deux lobes diamétralement opposés à celui-ci (ce phénomène est volontairement exagéré sur la figure 5, pour faciliter la compréhension).

Dans les différents modes de réalisation de l'invention, le sommet de l'angle α1, α2 ou α'1 est situé sensiblement sur la surface périphérique extérieure 20 de la partie terminale filetée 10. Le terme "sensiblement" signifie que le sommet de l'angle peut être placé sur cette surface (figures 3 et 5) ou à proximité de celle-ci (figure 4).

La forme particulière de l'empreinte 14 selon l'invention, en particulier le maintien du rapport entre les distances maximale d1 et minimale d2 dans une fourchette comprise entre environ 1,25 et environ 1,75, permet de maintenir la résistance à la fissuration lors de la fabrication du filetage 16 par roulage, à une valeur optimisée sensiblement constante sur toute la périphérie de la pièce. En d'autres termes, on optimise ainsi la surface délimitée en section entre la surface périphérique extérieure 20 et le bord périphérique 18 de l'empreinte 14.

Cette caractéristique est illustrée par la figure 6, qui représente l'évolution de l'effort de fissuration (en kN) sous l'effet d'un chargement du type produit par un effort de roulage (c'est-à-dire agissant principalement selon un diamètre) en fonction de l'angle de chargement (en degrés). Plus précisément, les courbes a, b et c représentent respectivement cette évolution dans le cas d'une empreinte hexagonale, dans le cas d'une empreinte à six lobes conforme à l'invention et dans le cas d'une empreinte à cinq lobes conforme à l'invention telle qu'illustrée sur la figure 3.

Comme l'illustre à titre d'exemple la courbe a, une empreinte hexagonale classique commence à se fissurer pour des efforts faibles (environ 23 kN). Cela explique pourquoi il n'est pas possible de former un filetage par roulage après avoir réalisé une telle empreinte dans un matériau difficile à déformer plastiquement tel qu'un acier à haute résistance, un alliage de titane, etc..

Dans le cas d'une empreinte de forme multilobée à six lobes (courbe b), dans laquelle le rapport des distances d1/d2 est conforme à l'invention, l'amplitude de variations de l'effort critique est réduite de façon importante par rapport à l'empreinte hexagonale classique de la courbe a. De plus, les points bas sont situés beaucoup plus haut (vers 39 kN).

La courbe c montre le cas optimisé d'une empreinte multilobée à cinq lobes, conforme à l'invention telle que décrite en référence à la figure 3. Le profil de la courbe est pratiquement plat (amplitude de variations inférieure à 1 kN) et le niveau d'effort est supérieur de 10 % à celui de l'empreinte à six lobes et de 80 à 90 % aux points bas de la courbe a (empreinte hexagonale). Cela permet de supprimer pratiquement les surcontraintes et d'améliorer notablement en service la tenue en fatigue de la vis, du fait que le matériau ne présente pas de point faible après la formation du filetage.

Un organe de fixation doté d'une empreinte telle que le rapport entre la distance maximale et la distance minimale est supérieur à environ 1,75 présenterait au contraire une évolution en dents de scie sensiblement plus marquée, se traduisant par un risque de fissuration lors de la fabrication du filetage. Par ailleurs, un rapport de distances inférieur à environ 1,25 se traduirait par une déformation de l'empreinte sous l'effet de sa coopération avec l'outil de manoeuvre.

En conclusion, l'invention permet donc de définir une empreinte multilobée optimisée, autorisant la formation d'un filetage sur le contour de l'ébauche, sans provoquer l'apparition de criques ou une déformation permanente.

## Revendications

1. Organe de fixation comprenant une partie terminale filetée (10) dont une surface périphérique extérieure (20) présente un filetage (16) et dont une face d'extrémité (12) présente une empreinte en creux (14) formée à l'intérieur du filetage (16) et apte à recevoir un outil de manoeuvre dudit organe, ladite empreinte (14) comportant un bord périphérique (18) en forme de ligne courbe continue incluant au moins trois lobes, répartis sur ledit bord, **caractérisé en ce que** la distance entre le bord périphérique (18) de l'empreinte et une surface périphérique extérieure (20) de la partie terminale filetée (10), à mi hauteur des filets du filetage, varie entre une distance maximale (d1) et une distance minimale (d2), le rapport entre lesdites distances maximale et minimale étant compris entre environ 1,25 et environ 1,75, **en ce que** chaque lobe comprend deux faces latérales formant entre elles un angle (α1, α2) dont le sommet est situé sensiblement sur la surface périphérique extérieure (20) de la partie terminale filetée (10), et **en ce que** ledit angle (α1, α2) est compris entre environ 23° et environ 37°.

2. Organe de fixation selon la revendication 1, dans lequel tous les lobes sont identiques et régulièrement répartis.

3. Organe de fixation selon l'une quelconque des revendications précédentes, dans lequel le bord périphérique (18) de l'empreinte (14) comprend de quatre à dix lobes.

4. Organe de fixation selon la revendication 3, dans lequel le bord périphérique (18) de l'empreinte (14) comprend cinq lobes et ledit angle (α1) est compris entre 26° et 32°.

5. Organe de fixation selon la revendication 3, dans lequel le bord périphérique (18) de l'empreinte (14) comprend sept lobes et ledit angle (α2) est compris entre 25° et 27°.

6. Organe de fixation selon l'une quelconque des revendications précédentes, dans lequel le rapport entre les distances maximale (d1) et minimale (d2) est sensiblement égal à 1,5.

7. Organe de fixation selon l'une quelconque des revendications précédentes, dans lequel ledit organe est en alliage de titane.

## Claims

1. Fixing unit comprising a threaded terminal portion (10), whereof an outer peripheral surface (20) has a thread (16) and whereof an end face (12) has a hollow impression (14) formed within the thread (16) and which is able to receive a tool for manipulating said unit, said impression (14) having a peripheral edge (18) in the form of a continuous curved line including at least three lobes distributed over the edge thereof, **characterized in that** the distance between the peripheral edge (18) of the impression and a peripheral outer surface (20) of the threaded terminal portion (10) at mid-height of the individual threads varies between a maximum distance (d1) and a minimum distance (d2), the ratio between said maximum and minimum distances being between approximately 1.25 and approximately 1.75 **in that** each lobe comprises two lateral faces forming between them an angle (α1, α2), whose apex is located substantially on the outer peripheral surface (20) of the threaded terminal portion (10), and **in that** said angle (α1, α2) is between approximately 23° and approximately 37°.

2. Fixing unit according to claim 1, wherein all the lobes are identical and regularly distributed.

3. Fixing unit according to any one of the preceding claims, wherein the peripheral edge (18) of the impression (14) has four to ten lobes.

4. Fixing unit according to claim 3, wherein the peripheral edge (18) of the impression (14) comprises five lobes and said angle (α1) is between 26° and 32°.

5. Fixing unit according to claim 3, wherein the peripheral edge (18) of the impression (14) comprises seven lobes and said angle (α2) is between 25° and 27°.

6. Fixing unit according to one of the preceding claims, wherein the ratio between the maximum distance (d1) and minimum distance (d2) is substantially equal to 1.5.

7. Fixing unit according to any one of the preceding claims, wherein said unit is of titanium alloy.

## Patentansprüche

1. Befestigungselement mit einem Gewindeendteil (10), bei dem eine äußere Umfangsfläche (20) ein Gewinde (16) aufweist und bei dem eine Stirnseite (12) ein Innenprofil (14) aufweist, das innen im Gewinde (16) ausgebildet ist und im Stande ist, ein Werkzeug zum Bedienen des Elements aufzunehmen, wobei das Innenprofil (14) einen Umfangsrand (18) in Form einer kontinuierlichen gekrümmten Linie aufweist, die wenigstens drei Bögen umfasst, die auf dem Rand verteilt sind, **dadurch gekennzeichnet, dass** der Abstand zwischen dem Umfangsrand (18) des Innenprofils und einer äußeren Umfangsfläche (20) des Gewindeendteils (10) auf halber Höhe der Gewindegänge des Gewindes zwischen einem maximalen Abstand (d1) und einem minimalen Abstand (d2) variiert, wobei das Verhältnis zwischen dem maximalen und dem minimalen Abstand zwischen etwa 1,25 und etwa 1,75 liegt, dass jeder Bogen zwei Seitenflächen aufweist, die miteinander einen Winkel (α1, α2) bilden, dessen Spitze im Wesentlichen auf der äußeren Umfangsfläche (20) des Gewindeendteils (10) liegt, und dass der Winkel (α1, α2) zwischen etwa 23° und etwa 37° beträgt.

2. Befestigungselement nach Anspruch 1,
bei dem alle Bögen identisch und gleichmäßig verteilt sind.

3. Befestigungselement nach einem der vorhergehenden Ansprüche,
bei dem der Umfangsrand (18) des Innenprofils (14) vier bis zehn Bögen aufweist.

4. Befestigungselement nach Anspruch 3,
bei dem der Umfangsrand (18) des Innenprofils (14) fünf Bögen aufweist und der Winkel (α1) zwischen 26° und 32° beträgt.

5. Befestigungselement nach Anspruch 3,
bei dem der Umfangsrand (18) des Innenprofils (14) sieben Bögen aufweist und der Winkel (α2) zwischen 25° und 27° beträgt.

6. Befestigungselement nach einem der vorhergehenden Ansprüche,
bei dem das Verhältnis zwischen dem maximalen (d1) und dem minimalen (d2) Abstand im Wesentlichen 1,5 beträgt.

7. Befestigungselement nach einem der vorhergehenden Ansprüche,
bei dem das Element aus Titanlegierung ist.
